# EUROPEAN PATENT SPECIFICATION

(11) **EP 4 056 022 B1**
(45) Date of publication and mention of the grant of the patent: **07.02.2024**
(21) Application number: 22160614.8
(22) Date of filing: 07.03.2022
(51) Int. Cl.: A01D 78/10

(54) **FRONT-MOUNTING COMB-TYPE SIDE DELIVERY RAKE**
ZWEIKAMM-SEITENABLAGESCHWADER MIT SCHWADANORDNUNG FÜR FRONTMONTAGE
RÂTEAU À DISTRIBUTION LATÉRALE À PEIGNES POUR MONTAGE AVANT

(30) Priority: 08.03.2021 IT 202100005303
(43) Date of publication of application: 14.09.2022
(73) Proprietor: Repossi Macchine Agricole S.r.l., 27022 Casorate Primo (PV) (IT)
(72) Inventor: REPOSSI, Gabriele, 27022 CASORATE PRIMO (PV) (IT)
(74) Representative: Studio Torta S.p.A.

(56) References cited:
- EP-A1- 2 384 615
- EP-B1- 2 807 913
- DE-A1- 4 329 647
- DE-A1- 10 110 096
- DE-A1-102006 014 652

## Description

### TECHNICAL FIELD

The present invention relates to a front-mounting comb-type side delivery rake with variable configuration.

### STATE OF THE PRIOR ART

As is known, side delivery rakes are used in agriculture for moving forage after mowing and for heaping up the worked material in aisles, normally called windrows. Among the most commonly used side delivery rakes there are the comb-type side delivery rakes, which may be towed or carried frontally by a transport means, for example a tractor. The side delivery rakes carried frontally have the advantage of moving the forage before the passing of the tractor. This prevents the trampling, which is however harmful and is particularly detrimental in the case of some types of more delicate forages, such as alfalfa.

Although some front-mounted comb-type side delivery rakes may have a rather complex structure, with a plurality of windrowing assemblies articulated about horizontal axes so as to be lifted during the transportation, other side delivery rakes have a simpler structure and corresponding lower manufacturing costs. Side delivery rakes of this type are normally provided with a single windrowing assembly directly rigidly connected to a three-point hitch and are particularly suitable for use on not very vast plots of land or on steep lands. However, the need to have a widest possible working front is in conflict with the rules that govern the road circulation of agricultural means and impose limitations on the lateral size. The working front, which is defined in a vertical plane by the combs of the windrowing assembly and is oblique with respect to the travel direction, must obviously be wide in order to be able to work the lands in a fewer number of passages. However, the rigid connection of the windrowing assembly to the three-point hitch does not allow modifying the configuration of the side delivery rake during the transportation. An excessive width of the working front, although being technically manufacturable and generally desirable, would not be compatible with the circulation restrictions. The limitations on the lateral size imposed by the regulations thus result in undesired and unnecessary limitations in the width of the working front.

EP 2 807 913 B1 describes a front-mounting comb-type side delivery rake comprising a hitch device for the connection to a transport means and a single comb-type windrowing assembly hinged to the hitch device, so that the windrowing assembly is laterally orientable with respect to a travel direction between a work position, in which the windrowing assembly has a greater lateral size with respect to the travel direction, and a transport position, in which the windrowing assembly has a smaller lateral size with respect to the travel direction. The windrowing assembly comprises a supporting structure, hinged to the hitch device, and a first rotating support and a second rotating support connected to the supporting structure. The second rotating support is more forward with respect to the first rotating support with respect to the travel direction. The first rotating support is more forward with respect to the travel direction in the work position than in the transport position and the second rotating support is more forward with respect to the travel direction in the transport position than in the work position.

Another example of a known side delivery rake is described in DE 10 2006 014652 A1.

### OBJECT OF THE INVENTION

The object of the present invention is thus to provide a front-mounting comb-type side delivery rake which allows overcoming the described limitations.

According to the present invention, a front-mounting comb-type side delivery rake is manufactured as defined in claim 1.

### BRIEF DESCRIPTION OF THE DRAWINGS

The present invention will now be described with reference to the accompanying drawings, which illustrate a non-limiting example embodiment thereof, wherein:
- Figure 1 is a top plan schematic view of a side delivery rake according to an embodiment of the present invention connected to an agricultural means, in a first configuration;
- Figure 2 is a top plan schematic view of a side delivery rake according to an embodiment of the present invention connected to an agricultural means, in a second configuration;
- Figure 3 is a perspective view of the side delivery rake of Figure 1 in the first configuration;
- Figure 4 is a perspective view of the side delivery rake of Figure 1 in the second configuration;
- Figure 5 is a more detailed top plan view of the side delivery rake of Figure 1 in the first configuration;
- Figure 6 is a more detailed top plan view of the side delivery rake of Figure 1 in the second configuration;
- Figure 7 is a first perspective view of an enlarged detail and with parts removed for clarity of the side delivery rake of Figure 1 in the second configuration; and
- Figure 8 is a second perspective view of the detail of Figure 7, in the second configuration.

### PREFERRED EMBODIMENT OF THE INVENTION

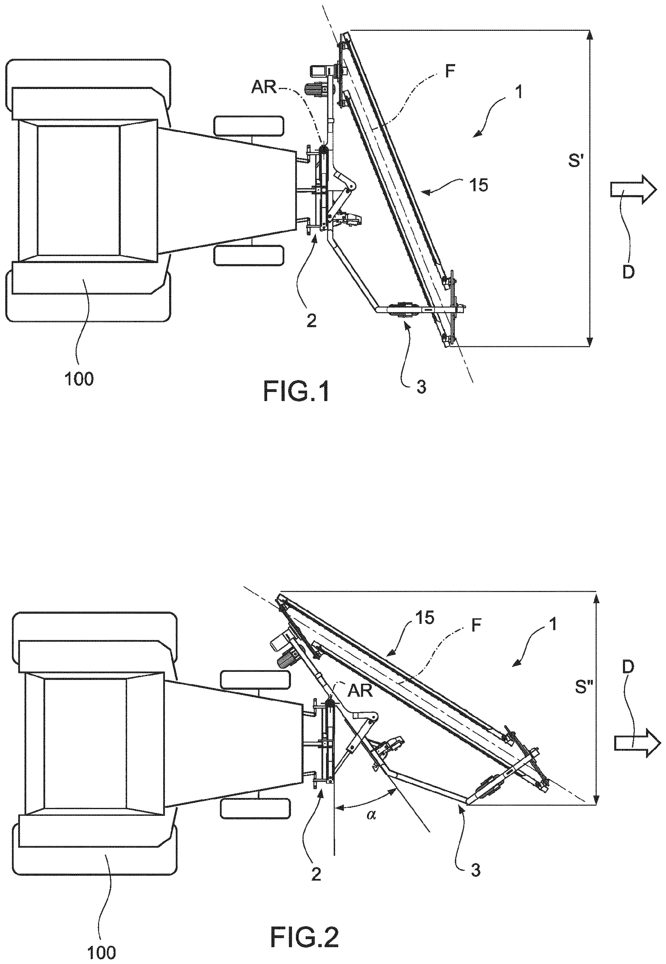

With reference to Figures 1-6, a front-mounting comb-type side delivery rake according to an embodiment of the present invention is indicated with reference numeral 1 and comprises a hitch device to a transport means, for example a three-point hitch 2, a single comb-type windrowing assembly 3, hinged to the three-point hitch about a hinge axis AR and defining a substantially planar working front F, and a main actuator 4, for example a hydraulic cylinder, for rotating the windrowing assembly 3 with respect to the three-point hitch 2.

The side delivery rake 1 in use is connected by the three-point hitch 2 to the front lifter of an agricultural means, for example a tractor 100 which proceeds along a travel direction D (Figures 1 and 2), which is thus also the travel direction of the side delivery rake 1. The hinge coupling between the windrowing assembly 3 and the three-point hitch 2 is made so that the windrowing assembly is laterally orientable with respect to the travel direction D and may laterally oscillate from right to left and vice versa. The side delivery rake 1 has a work configuration and a transport configuration. In the work configuration (Figures 1, 3, 5), with the front lifter of the tractor 100 lowered, the hinge axis AR in an embodiment is substantially vertical, as well as the working front F. The windrowing assembly 3 is arranged in a work position, in which the working front F is oriented in an optimum manner for treating the forage. In this case, the side delivery rake has a size S' transverse to a greater travel direction D so as to better exploit the width of the working front F.

In the transport configuration (Figures 2, 4, 6), the windrowing assembly 3 is in a transport position rotated by an angle a, for example greater than 20°, with respect to the work position, so as to offer a smaller transverse size S" and allow the road transportation.

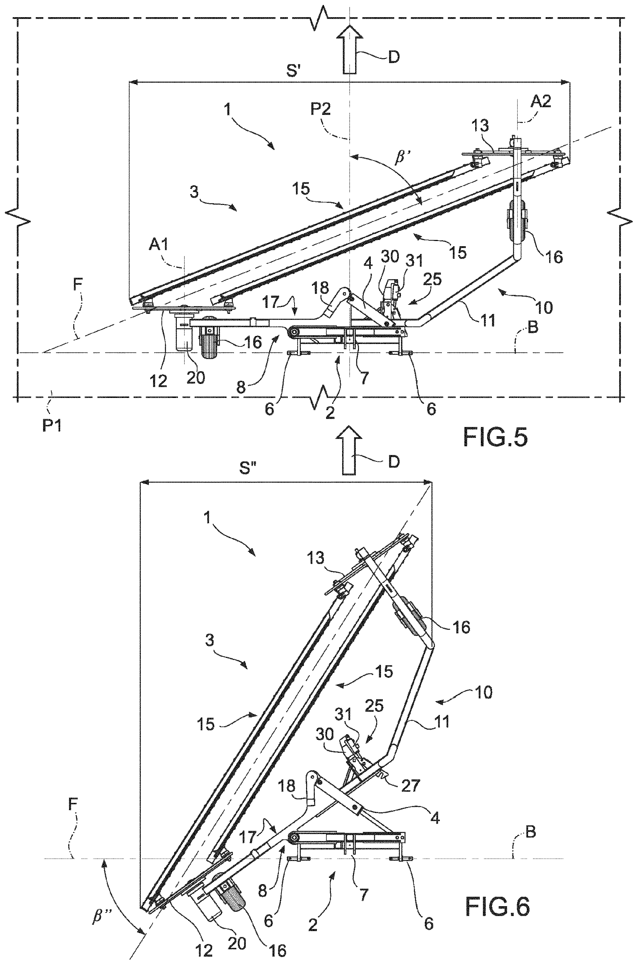

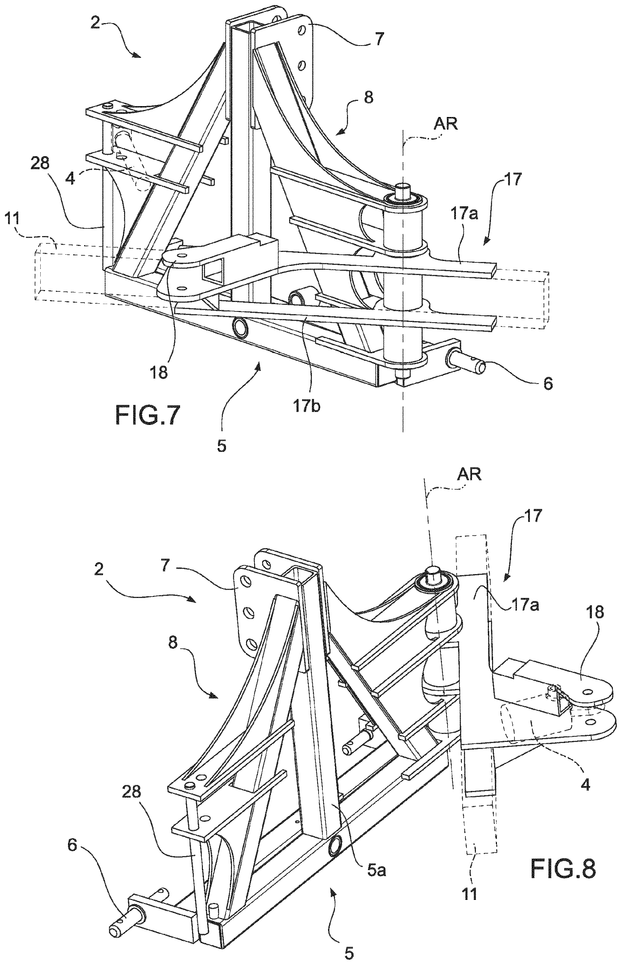

Specifically, with reference to Figures 7 and 8, the three-point hitch 2 comprises a frame 5, two base hitch points 6, an apex hitch point 7 and a mount 8. The base hitch points 6 are mounted to opposite ends of an oscillating bar 9, in turn connected to a base of the frame 5 so as to oscillate in a plane perpendicular to the travel direction D. The base hitch points 6 are further defined by respective pairs of pins aligned along a base direction B perpendicular as well to the travel direction D (see also Figures 5 and 6). The frame 5 has the shape of an isosceles triangle with a reinforcement upright 5a corresponding to the height of the isosceles triangle. The mount 8 for the connection to the windrowing assembly 3, is as explained in the following. In an embodiment, the mount 8 comprises a plurality of plates welded to the oblique sides of the frame 5. The mount 8 supports, on a first side, the hinge coupling with the windrowing assembly 3; and on a second side, opposite the first side, a rotatable connection for a first end of the main actuator 4.

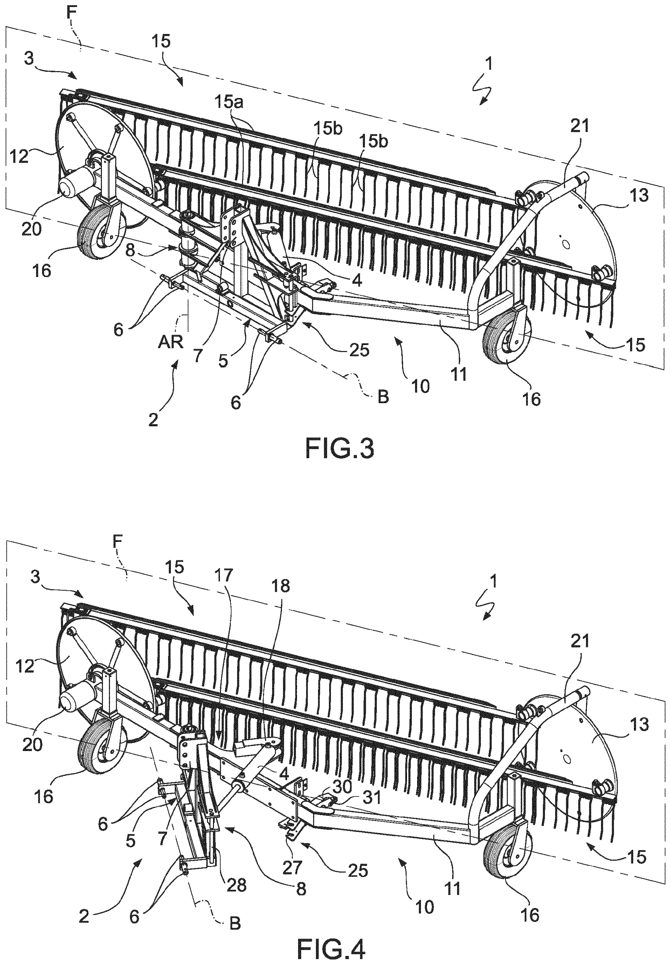

The windrowing assembly 3 (Figures 3-6) comprises a supporting structure 10, a first rotating support 12, a second rotating support 13 and a plurality of combs 15. Furthermore, the windrowing assembly 3 is provided with swiveling wheels 16 adjustable in height.

The supporting structure 10 comprises a bar 11 which is connected to the frame 5 opposite with respect to the hitch points 6, 7 of the three-point hitch 8 and extends on opposite sides of the three-point hitch 2 with respect to a travel direction D of the side delivery rake 1 in use. The bar 11 of the supporting structure 10 is connected to the frame 5 of the three-point hitch 2 at a height between the height of the base hitch points 6 and the height of an apex hitch point 7.

The bar 11 has a first portion substantially rectilinear and a second portion bent forward with respect to the travel direction D of the side delivery rake 1. The first portion of the bar 11 is hinged to the mount 8 through a connecting structure 17. As shown more specifically in Figures 7 and 8, in an embodiment the connecting structure 17 comprises an upper plate 17a and a lower plate 17b, provided with respective eyelets for the hinge coupling to the mount 8. The hinge axis AR extends in the proximity of one of the base points 6 and, in an embodiment, it is vertical when the side delivery rake 1 is in the work configuration. Furthermore, the upper plate 17a comprises a maneuvering arm 18 for the connection to a second end of the main actuator 4. The first portion of the bar 11 is welded between the upper plate 17a and the lower plate 17b of the connecting structure 17.

With reference again to Figures 3 and 4, the first rotating support 12 and the second rotating support 13 have equal dimensions and are connected to the bar 11 with respective parallel rotation axes A1, A2. In particular, the first rotating support 12 is connected to a first end of the bar 11 on the side for unloading the worked forage and is operated by a hydraulic motor 20. The second rotating support 13 is connected to a second end of the bar 11 opposite the first end by an arch 21 in a more forward position with respect to the first rotating support 12 according to the travel direction D. The second rotating support 13 is further driven into rotation by the first rotating support 12 through the combs 15. The common orientation of the combs 15 defines the working front F, which in an embodiment is substantially perpendicular to a first reference plane P1 containing the rotation axes A1, A2 of the first rotating support 12 and of the second rotating support 13.

The combs 15, for example five, of which only three are shown in Figures 3 and 4 for convenience, have respective ends connected in an articulated manner to the first rotating support 12 and to the second rotating support 13, so as to remain parallel when the first rotating support and the second rotating support rotate. More precisely, each comb 15 has a back 15a and teeth 15b; the back 15a has ends connected to the first rotating support 12 and to the second rotating support 13 and, in use, translates remaining substantially horizontal, whereas the teeth 15b extend vertically from the back 15a.

As mentioned, the windrowing assembly 3 is rotatable with respect to the three-point hitch 2 about the hinge axis AR between the work position and the transport position. In the work position, the working front F forms a first acute angle β' with a second reference plane P2 perpendicular to the first reference plane P1 and parallel to the travel direction D, as shown in Figure 5. In the transport position, the working front forms a second acute angle β" with the second reference plane P2. The second acute angle β" is greater than the first acute angle β' and the difference, equal to the angle α, is comprised between 30° and 40°. Furthermore, the first rotating support is more forward with respect to the travel direction in the work position than in the transport position and the second rotating support is more forward with respect to the travel direction in the transport position than in the work position.

The main actuator 4 is connected to the three-point hitch 2 and to the supporting structure 10 so that the operation of the main actuator 4 causes the rotation of the supporting structure 10 about the hinge axis AR between the work position and the transport position. Specifically, the main actuator 4 has a first end hinged to the mount 8 of the frame 5, on the opposite side with respect to the hinge axis AR, and a second end hinged to the maneuvering arm 18 of the connecting structure 17. The main actuator 4 has a retracted position and an extended position, which respectively correspond to the work position and to the transport position of the windrowing assembly 3.

The side delivery rake 1 is also provided with a releasable locking device 25, configured to lock the windrowing assembly 3 in the work position and to be released when it is necessary to bring the windrowing assembly 3 in the transport position. The releasable locking device 25 prevents the stresses transmitted from the land in use from causing the shifting of the windrowing assembly 3 from the work position. In an embodiment, the locking device 25 comprises a hook 27 (in particular Figures 5 and 6), mounted to the supporting structure 10 and an anchorage 28 (visible also in Figures 7 and 8) mounted to the three-point hitch 2. More precisely, the hook 27 is mounted by a support 30 to the first portion of the bar 11 and is configured to be alternatively engaged to the anchorage 28 and released from the anchorage 28. In the embodiment described herein, the anchorage 28 is defined by a vertical rod mounted to the mount 8 on the opposite side of the frame 5 with respect to the hinge axis AR and in the proximity of the connection point of the main actuator 4.

The locking device comprises an auxiliary actuator 31, operable for alternatively engaging and releasing the hook 27. The auxiliary actuator 31 may be for example a hydraulic cylinder having a first end connected to the support 30 and a second end connected to the hook 27. The operation of the secondary actuator 31 causes the rotation of the hook 27 about a pin parallel to the rod forming the anchorage 28. The hook 27 is thus alternatively coupled to the anchorage 28 so as to prevent the shifting of the windrowing assembly 3 from the work position and released when the windrowing assembly 3 has to be brought in the transport position.

The hinge coupling between the windrowing assembly 3 and the three-point hitch 2 allows modifying their relative position and thus the configuration of the side delivery rake 1 according to need. In particular, the windrowing assembly 3 may be oriented for exploiting the width of the working front in an optimum manner during the treatment of the forage, as shown in Figure 5. In this condition, in fact, a wide working front is advantageous for optimizing the covering of the land and reducing the number of necessary passages. During the road transportation, instead, the windrowing assembly 3 may be rotated so that the transverse size with respect to the travel direction is reduced and made compatible with the circulation rules of the agricultural means.

Furthermore, the side delivery rake according to the invention maintains a structure which is simple and relatively cost-effective to manufacture.

Finally, it is evident that modifications and variations may be made to the described side delivery rake, without thereby departing from the scope of the present innovation, as defined in the appended claims.

In particular, the hinge coupling between the three-point hitch and the windrowing assembly may be made with different constructive details with respect to the ones described and illustrated. In fact, any type of hinge coupling that allows the right-left shifting and vice versa of the windrowing assembly with respect to the travel direction also allows arranging the windrowing assembly in different positions for the working of the land and for the transportation, so as to satisfy both the practical needs of optimizing the passages necessary for covering a plot of land, and the restrictions imposed by the road regulations. Clearly, it is not indispensable for the hinge axis to be exactly vertical or perpendicular to the reference plane containing the rotation axes of the rotating supports. In fact, it is sufficient for the rotation of the windrowing assembly to allow modifying the transverse size without significantly modifying the size in height, as the lifting of a part of the windrowing assembly could hinder the view during the road transportation.

The releasable locking device may have a structure different from the one described. For example, in an embodiment the hook could be mounted to the frame or to the mount and the anchorage could be made on the supporting structure of the windrowing assembly.

## Claims

1. Front-mounting comb-type side delivery rake comprising a hitch device (2) for the connection to a transport means and a single comb-type windrowing assembly (3) hinged to the hitch device (2), so that the windrowing assembly (3) is laterally orientable with respect to a travel direction between a work position, in which the windrowing assembly (3) has a greater lateral size with respect to the travel direction, and a transport position, in which the windrowing assembly (3) has a smaller lateral size with respect to the travel direction; wherein the windrowing assembly (3) comprises:
a supporting structure (10) hinged to the hitch device (2) ;
a first rotating support (12) and a second rotating support (13) connected to the supporting structure (10), with the second rotating support (13) more forward with respect to the first rotating support (12) with respect to the travel direction (D);
and wherein the first rotating support (12) is more forward with respect to the travel direction (D) in the work position than in the transport position and the second rotating support (13) is more forward with respect to the travel direction (D) in the transport position than in the work position;
**characterized in that** the first rotating support (12) and the second rotating support (13) are connected to the supporting structure (10) with respective rotation axes (A1, A2) parallel to each other; and wherein the windrowing assembly (3) is rotatable with respect to the hitch device (2) about a hinge axis (AR) perpendicular to a first reference plane (P1) containing the rotation axes (A1, A2) of the first rotating support (12) and of the second rotating support (13).

2. The side delivery rake according to claim 1, wherein the windrowing assembly (3) comprises a plurality of combs (15), each provided with a back (15a) and with teeth (15b) and having respective ends connected in an articulated manner to the first rotating support (12) and to the second rotating support (13), so as to remain parallel to one another when the first rotating support (12) and the second rotating support (13) rotate.

3. The side delivery rake according to claim 2, wherein an orientation of the combs (15) defines a working front (F) of the windrowing assembly (3).

4. The side delivery rake according to claim 3, wherein the working front in the work position forms a first acute angle (β') with a second reference plane (P2) perpendicular to the first reference plane (P1) and parallel to the travel direction (D) and in the transport position forms a second acute angle (β") with the second reference plane (P2), the second acute angle (β") being greater than the first acute angle (β').

5. The side delivery rake according to claim 4, wherein a difference between the first acute angle (β') and the second acute angle (β") is greater than 20°.

6. The side delivery rake according to any one of the foregoing claims, comprising a main actuator (4) operable to move the windrowing assembly (3) between the work position and the transport position.

7. The side delivery rake according to any one of the foregoing claims, wherein the hitch device (2) comprises a frame (5) and the supporting structure (10) is hinged to the frame (5) by a connecting structure (17).

8. The side delivery rake according to claim 7 as appended to claim 6, wherein the main actuator (4) has a first end coupled to the hitch device (2) and a second end coupled to a maneuvering arm (18) of the connecting structure (17) .

9. The side delivery rake according to claim 7 or 8, wherein the supporting structure (10) is connected to the frame (5) of the hitch device (2) at a height between a height of base hitch points (6) and a height of an apex hitch point (7) of the hitch device (2).

10. The side delivery rake according to any one of the foregoing claims, comprising a releasable locking device (25), configured to lock the windrowing assembly (3) in the work position.

11. The side delivery rake according to claim 10, wherein the locking device (25) comprises a hook (27) mounted to the supporting structure (10) of the windrowing assembly (3) and an anchorage (28) mounted to the hitch device (2) and wherein the hook (27) is configured to be selectively engaged to the anchorage (28) and released from the anchorage (28) .

12. The side delivery rake according to claim 11, wherein the locking device (25) comprises an auxiliary actuator (31), operable to alternatively engage and release the hook (27).

13. The side delivery rake according to any one of the foregoing claims, wherein the windrowing assembly (3) laterally extends on opposite sides of the hitch device (2) with respect to the travel direction (D).

## Patentansprüche

1. Frontmontierter Kamm-Seitenablageschwader umfassend eine Anhängevorrichtung (2) für die Verbindung mit einem Transportmittel und einer an der Anhängevorrichtung (2) angelenkten einzelnen Kamm-Schwadanordnung (3), so dass die Schwadanordnung (3) in Bezug auf eine Fahrtrichtung seitlich ausrichtbar ist zwischen einer Arbeitsstellung, in der die Schwadanordnung (3) eine größere laterale Größe in Bezug auf die Fahrtrichtung aufweist, und einer Transportstellung, in der die Schwadanordnung (3) eine kleinere laterale Größe in Bezug auf die Fahrtrichtung aufweist, wobei die Schwadanordnung (3) umfasst:
eine Tragstruktur (10), die an der Anhängevorrichtung (2) angelenkt ist,
eine erste rotierende Stütze (12) und eine zweite rotierende Stütze (13), die mit der Tragstruktur (10) verbunden sind, wobei die zweite rotierende Stütze (13) in Bezug auf die erste rotierende Stütze (12) in Bezug auf die Fahrtrichtung (D) weiter vorne angeordnet ist,
und wobei die erste rotierende Stütze (12) in Bezug auf die Fahrtrichtung (D) in der Arbeitsstellung weiter nach vorne als in der Transportstellung angeordnet ist und die zweite rotierende Stütze (13) in Bezug auf die Fahrtrichtung (D) in der Transportstellung weiter nach vorne als in der Arbeitsstellung angeordnet ist;
**dadurch gekennzeichnet, dass** die erste rotierende Stütze (12) und die zweite rotierende Stütze (13) mit der Tragstruktur (10) mit jeweils parallel zueinander verlaufenden Drehachsen (A1, A2) verbunden sind, und wobei die Schwadanordnung (3) in Bezug auf die Anhängevorrichtung (2) um eine Scharnierachse (AR) senkrecht zu einer ersten Bezugsebene (P1) drehbar ist, die die Drehachsen (A1, A2) der ersten rotierende Stütze (12) und der zweiten rotierende Stütze (13) enthält.

2. Seitenablageschwader nach Anspruch 1, wobei die Schwadanordnung (3) mehrere Kämme (15) umfasst, die jeweils mit einem Rücken (15a) und mit Zähnen (15b) versehen sind und deren jeweilige Enden in gelenkiger Weise mit der ersten rotierenden Stütze (12) und mit der zweiten rotierenden Stütze (13) verbunden sind, so dass sie parallel zueinander bleiben, wenn sich die erste rotierende Stütze (12) und die zweite rotierende Stütze (13) drehen.

3. Seitenablageschwader nach Anspruch 2, wobei eine Ausrichtung der Kämme (15) eine Arbeitsfront (F) der Schwadanordnung (3) definiert.

4. Seitenablageschwader nach Anspruch 3, wobei die Arbeitsfront in der Arbeitsstellung einen ersten spitzen Winkel (β') mit einer zweiten Bezugsebene (P2) senkrecht zur ersten Bezugsebene (P1) und parallel zur Fahrtrichtung (D) bildet und in der Transportstellung einen zweiten spitzen Winkel (β") mit der zweiten Bezugsebene (P2) bildet, wobei der zweite spitze Winkel (β") größer ist als der erste spitze Winkel (β').

5. Seitenablageschwader nach Anspruch 4, wobei eine Differenz zwischen dem ersten spitzen Winkel (β') und dem zweiten spitzen Winkel (β") größer als 20° ist.

6. Seitenablageschwader nach einem der vorhergehenden Ansprüche, umfassend einen Hauptantrieb (4), der die Schwadanordnung (3) zwischen der Arbeitsposition und der Transportposition bewegen kann.

7. Seitenablageschwader nach einem der vorhergehenden Ansprüche, wobei die Anhängevorrichtung (2) einen Rahmen (5) umfasst und die Tragstruktur (10) durch eine Verbindungsstruktur (17) mit dem Rahmen (5) verbunden ist.

8. Seitenablageschwader nach Anspruch 7 soweit abhängig von Anspruch 6, wobei der Hauptantrieb (4) ein erstes Ende aufweist, das mit der Anhängevorrichtung (2) gekoppelt ist, und ein zweites Ende, das mit einem Manövrierarm (18) der Verbindungsstruktur (17) gekoppelt ist.

9. Seitenablageschwader nach Anspruch 7 oder 8, wobei die Tragstruktur (10) mit dem Rahmen (5) der Anhängevorrichtung (2) in einer Höhe zwischen einer Höhe der Basisanhängepunkte (6) und einer Höhe eines Scheitelanschlagpunktes (7) der Anhängevorrichtung (2) verbunden ist.

10. Seitenablageschwader nach einem der vorhergehenden Ansprüche, umfassend eine lösbare Verriegelungsvorrichtung (25), die dazu eingerichtet ist, die Schwadanordnung (3) in der Arbeitsstellung zu arretieren.

11. Seitenablageschwader nach Anspruch 10, wobei die Verriegelungsvorrichtung (25) einen Haken (27), der an der Tragstruktur (10) der Schwadanordnung (3) angebracht ist, und eine Verankerung (28), die an der Anhängevorrichtung (2) angebracht ist, umfasst und wobei der Haken (27) so konfiguriert ist, dass er selektiv in die Verankerung (28) eingreift und von der Verankerung (28) gelöst wird.

12. Seitenablageschwader nach Anspruch 11, wobei die Verriegelungsvorrichtung (25) einen Hilfsantrieb (31) umfasst, der so betätigt werden kann, dass er den Haken (27) alternativ in Eingriff nimmt und freigibt.

13. Seitenablageschwader nach einem der vorhergehenden Ansprüche, wobei sich die Schwadanordnung (3) in Bezug auf die Fahrtrichtung (D) seitlich auf gegenüberliegenden Seiten der Anhängevorrichtung (2) erstreckt.

## Revendications

1. Râteau à dépose latérale de type à peigne à montage frontal comprenant un dispositif d'attelage (2) pour la liaison à un moyen de transport et un ensemble d'andainage de type à peigne unique (3) articulé au dispositif d'attelage (2), de sorte que l'ensemble d'andainage (3) est orientable latéralement par rapport à une direction de déplacement entre une position de travail, dans laquelle l'ensemble d'andainage (3) a une taille latérale plus grande par rapport à la direction de déplacement, et une position de transport, dans laquelle l'ensemble d'andainage (3) a une taille latérale plus petite par rapport à la direction de déplacement ; dans lequel l'ensemble d'andainage (3) comprend :
une structure de support (10) articulée au dispositif d'attelage (2) ;
un premier support rotatif (12) et un second support rotatif (13) reliés à la structure de support (10), le second support rotatif (13) étant plus en avant par rapport au premier support rotatif (12) par rapport à la direction de déplacement (D) ;
et dans lequel le premier support rotatif (12) est plus en avant par rapport à la direction de déplacement (D) en position de travail qu'en position de transport et le second support rotatif (13) est plus en avant par rapport à la direction de déplacement (D) en position de transport qu'en position de travail ;
**caractérisé par le fait que** le premier support rotatif (12) et le second support rotatif (13) sont reliés à la structure de support (10) avec des axes de rotation respectifs (A1, A2) parallèles l'un à l'autre ; et dans lequel l'ensemble d'andainage (3) est rotatif par rapport au dispositif d'attelage (2) autour d'un axe d'articulation (AR) perpendiculaire à un premier plan de référence (P1) contenant les axes de rotation (A1, A2) du premier support rotatif (12) et du second support rotatif (13).

2. Râteau à dépose latérale selon la revendication 1, dans lequel l'ensemble d'andainage (3) comprend une pluralité de peignes (15), chacun pourvu d'un dos (15a) et de dents (15b) et ayant des extrémités respectives reliées de manière articulée au premier support rotatif (12) et au second support rotatif (13), de sorte à rester parallèles l'une à l'autre lorsque le premier support rotatif (12) et le second support rotatif (13) sont en rotation.

3. Râteau à dépose latérale selon la revendication 2, dans lequel une orientation des peignes (15) définit un front de travail (F) de l'ensemble d'andainage (3).

4. Râteau à dépose latérale selon la revendication 3, dans lequel le front de travail en position de travail forme un premier angle aigu (β') avec un second plan de référence (P2) perpendiculaire au premier plan de référence (P1) et parallèle à la direction de déplacement (D) et en position de transport forme un second angle aigu (β") avec le second plan de référence (P2), le second angle aigu (β") étant plus grand que le premier angle aigu (β').

5. Râteau à dépose latérale selon la revendication 4, dans lequel la différence entre le premier angle aigu (β¹) et le second angle aigu (β") est supérieure à 20°.

6. Râteau à dépose latérale selon l'une quelconque des revendications précédentes, comprenant un actionneur principal (4) capable de déplacer l'ensemble d'andainage (3) entre la position de travail et la position de transport.

7. Râteau à dépose latérale selon l'une quelconque des revendications précédentes, dans lequel le dispositif d'attelage (2) comprend un cadre (5) et la structure de support (10) est articulée au cadre (5) par une structure de liaison (17).

8. Râteau à dépose latérale selon la revendication 7 telle qu'annexée à la revendication 6, dans lequel l'actionneur principal (4) a une première extrémité couplée au dispositif d'attelage (2) et une seconde extrémité couplée à un bras de manœuvre (18) de la structure de liaison (17).

9. Râteau à dépose latérale selon la revendication 7 ou 8, dans lequel la structure de support (10) est reliée au cadre (5) du dispositif d'attelage (2) à une hauteur comprise entre la hauteur des points d'attelage de base (6) et la hauteur d'un point d'attelage de sommet (7) du dispositif d'attelage (2).

10. Râteau à dépose latérale selon l'une quelconque des revendications précédentes, comprenant un dispositif de verrouillage libérable (25), configuré pour verrouiller l'ensemble d'andainage (3) en position de travail.

11. Râteau à dépose latérale selon la revendication 10, dans lequel le dispositif de verrouillage (25) comprend un crochet (27) monté sur la structure de support (10) de l'ensemble d'andainage (3) et un ancrage (28) monté sur le dispositif d'attelage (2) et dans lequel le crochet (27) est configuré pour être sélectivement engagé dans l'ancrage (28) et libéré de l'ancrage (28).

12. Râteau à dépose latérale selon la revendication 11, dans lequel le dispositif de verrouillage (25) comprend un actionneur auxiliaire (31), capable d'engager et de libérer alternativement le crochet (27).

13. Râteau à dépose latérale selon l'une quelconque des revendications précédentes, dans lequel l'ensemble d'andainage (3) s'étend latéralement sur des côtés opposés du dispositif d'attelage (2) par rapport à la direction de déplacement (D).
